(19) Europäisches Patentamt
European Patent Office
Office européen des brevets

(11) EP 1 254 914 A1

(12) **EUROPÄISCHE PATENTANMELDUNG**

(43) Veröffentlichungstag:
**06.11.2002 Patentblatt 2002/45**

(51) Int Cl.[7]: **C08F 8/00**, B01J 45/00

(21) Anmeldenummer: **02008195.6**

(22) Anmeldetag: **17.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **30.04.2001 DE 10121163**

(71) Anmelder: **BAYER AG**
**51368 Leverkusen (DE)**

(72) Erfinder:
- **Klipper, Reinhold, Dr.**
  **50933 Köln (DE)**
- **Seidel, Rüdiger, Dr.**
  **51375 Leverkusen (DE)**
- **Hees, Bruno**
  **40764 Langenfeld (DE)**
- **Irmscher, Dieter**
  **51429 Bergisch Gladbach (DE)**
- **Lehmann, Bernhard**
  **52072 Aachen (DE)**
- **Lütjens, Holger, Dr.**
  **51069 Köln (DE)**
- **Schnegg, Ulrich, Dr.**
  **51377 Leverkusen (DE)**
- **Zarges, Wolfgang, Dr.**
  **51069 Köln (DE)**

(54) **Verfahren zur Herstellung heterodisperser Chelatharze**

(57) Die Aufgabe der vorliegenden Erfindung ist ein Verfahren zur Herstellung von neuen, heterodispersen Chelatharzen mit chelatisierenden funktionellen Gruppen und ihre Verwendung zur Adsorption von Metallverbindungen insbesondere Erdalkalimetallen, Schwer- und Edelmetallverbindungen sowie zur Extraktion von Erdalkalimetallen aus Solen der Alkalichloridelektrolyse sowie in der Hydrometallurgie.

EP 1 254 914 A1

## Beschreibung

Gegenstand der vorliegenden Erfindung ist ein verbessertes Verfahren zur Herstellung von neuen, heterodispersen Ionenaustauschern mit chelatisierenden, funktionellen Gruppen, im Folgenden als heterodisperse Chelatharze bezeichnet, sowie ihre Verwendung.

Gegenwärtig unterscheidet man zwei wesentliche Herstellungsverfahren für Perlpolymerisate bzw. Ionentauscher: ein traditionelles, was zu heterodispersen Harzen führt und ein apparativ aufwendigeres Verfahren, womit man monodisperse Harze erhält. Je nach Bedarf lassen sich somit verschiedene Harztypen herstellen, so dass beide Verfahrensvarianten nebeneinander bestehen. Die vorliegende Anmeldung befasst sich jedoch nur mit einer Variante, nämlich die zur Herstellung heterodisperser Chelatharze.

Ionenaustauscher mit chelatisierenden, funktionellen Gruppen gehören bereits zum Stand der Technik. So werden Aminoalkylenphosphonsäuregruppen aufweisende Ionenaustauscherharze, Verfahren zu ihrer Herstellung und die Eigenschaften dieser Harze wie zum Beispiel Erdalkaliionen aus konzentrierten Alkalisalzlösungen, z.B. Kochsalzsole zu adsorbieren oder Schwermetallionen aus wässrigen Lösungen zu entfernen, in US 4 002 564 oder EP-A-0087934 beschrieben.

Chelatharze mit Iminoessigsäuregruppen werden aber auch bei Rudolf Hering, Chelatbildende Ionenaustauscher, Akademie Verlag, Berlin 1967, Seite 51 ff, beschrieben. In dieser Literaturstelle finden sich zudem Beispiele für weitere Chelatharztypen.

Eine weitverbreitete Anwendung in der Praxis von Ionenaustauschern mit chelatisierenden Gruppen ist die Entfernung von Erdalkaliionen aus konzentrierten Alkalisalzlösungen. Vor dem Einsatz liegen die chelatisierenden funktionellen Gruppen, zumeist als Aminoalkylenphosphonsäuregruppen oder Iminoessigsäuregruppen im Ionenaustauscher in der Natriumsalzform vor. Bei der Entfernung der Erdalkalien aus Solelösungen wird ein Teil der Natriumionen des Ionenaustauschers durch Erdalkaliionen ausgetauscht. Nach Beladung des Ionenaustauschers erfolgt zur Entfernung der Erdalkalimetalle (Regenerierung) eine Behandlung mit Mineralsäuren, der sich eine Behandlung mit Natronlauge zu Überführung der chelatisierenden Gruppen in die Na-Form anschließt. In dieser Beladungsform wird das Chelatharz zur Entfernung von Erdalkalimetallen aus der Sole eingesetzt.

Die während des Einsatzes von Chelatharzen sowie deren Regenerierung zu beobachtende Volumenänderung kann bis zu ca. 60 Volumenprozent betragen. Die Perlen schrumpfen und quellen und werden damit in erheblichem Maße osmotisch und mechanisch beansprucht. Diese Beanspruchung kann zu Perlbruch führen. Perlsplitter behindern dann den Durchfluss der mit dem Chelatharz zu behandelnden Flüssigkeit in der Säule und führen zu einer Erhöhung des Druckverlustes und zu Verunreinigungen in der zu reinigenden Flüssigkeit. Bei vielen Anwendungen müssen die Chelatharze täglich regeneriert werden. Da aber andererseits ihre Einsatzdauer mehrere Jahre betragen soll, so dass mehrere Hundert Regenerierungen im Laufe des Lebens eines Chelatharzes notwendig sind, liegt das Bestreben darin, heterodisperse Chelatharze zu entwickeln, die diese hohen Anforderungen erfüllen.

Es werden heterodisperse Chelatharze benötigt, die mechanisch und osmotisch derart stabil sind, dass selbst bei langjähriger Anwendung mit vielfacher Regenerierung möglichst wenig Perlbruch auftritt.

Verschiedene Maßnahmen wurden beschrieben um die Stabilität von Chelatharzen mit Aminoalkylenphosphonsäuregruppen zu verbessern.

In der EP-A-0087934, wird die Herstellung Alkylaminophosphonsäuregruppen funktionalisierter Chelatharze nach dem Chlormethylierungsverfahren beschrieben. Zur Erhöhung der Stabilität wird darin vorgeschlagen, makroporöse vernetzte vinylaromatische Perlpolymerisate mit bestimmten physikalischen Eigenschaften (bestimmter Dichte, bestimmter Korngröße, bestimmter Porosität, einem bestimmten Toluol Quellvolumen) als Ausgangsperlpolymerisate einzusetzen.

Die genannten Eigenschaften der Ausgangsperlpolymerisate liegen dabei in bestimmten, eng bemessenen Bereichen; der bei der Polymerisation eingesetzte Initiator wird nicht näher beschrieben.

Die Chlormethylierung erfolgt in EP-A-0087934 derart, dass der Gehalt des am Harz gebundenen Chlors begrenzt ist. Ziel ist es, die Austauschkapazität des Harzes zu begrenzen, da bei einem höheren Funktionalisierungsgrad Nachvernetzung eintritt. Da dies sowohl während der Chlormethylierung als auch bei der Phosphorylierung des aminierten Harzes eintritt, wird zwangsläufig die Beständigkeit des Harzes gegenüber osmotischem Schock beeinträchtigt. Darüber hinaus muss die Dauer und die Temperatur der Alkylphosphonierungsreaktion so gesteuert werden, dass die Austauschkapazität des erhaltenen Harzes begrenzt bleibt. Infolgedessen stellt die Erhöhung der osmotischen Widerstandsfähigkeit auf Kosten der Kapazität der Harze keine befriedigende Lösung des technischen Problems dar.

In der EP-A-0355007 wird ein Verfahren zur Herstellung von Chelatharzen mit Alkylaminophosphonsäuregruppen nach dem Phthalimidverfahren beschrieben. Die Chelatharze werden auf der Basis von vernetzten vinylaromatischen Perlpolymerisaten hergestellt. Ihre Herstellung wird in US 3,989,650, US 3,882,053 sowie in US 4,077,918 beschrieben.

Das in der EP-A-0355007 beschriebene Verfahren führt im Vergleich zu EP-A-0087934 zu stabileren Harzen. Dies wird dadurch erreicht, dass die Umsetzung der makroporösen, aminomethylierten vernetzten vinylaromatischen

Harze mit Formaldehyd und Phosphor-III-Verbindungen in Gegenwart von Schwefelsäure erfolgt und diese in einer solchen Menge eingesetzt wird, dass ihre Konzentration mindestens 20 Gew.-% - bezogen auf das Gesamtgewicht der flüssigen Phase des Reaktionsgemisches - beträgt.

Zudem wird durch den Einsatz von Schwefelsäure an Stelle von Salzsäure die Bildung von hochtoxischen Chlormethylethern bei der Phosphorylierung sicher vermieden.

Die durch die genannten Maßnahmen erreichten Stabilitätsverbesserungen sind aber begrenzt. Die hiernach hergestellten Harze zeigen zwar kurzzeitig - bei 30-maligem Wechsel der Beladungsform - eine ausreichende Quellungsstabilität, jedoch reicht diese für die in der Praxis verlangten langen Einsatzzeiten mit Beladungswechseln von 200 mal und mehr nicht aus.

Die bis jetzt bekannten Chelatharze mit Aminoalkylenphosphonsäuregruppen oder Iminodiessigsäuregruppen haben insgesamt gesehen den Nachteil, dass sie entweder nur eine unbefriedigende osmotische Stabilität (Quellungsstabilität) oder eine unzureichende Kapazität für die aufzunehmenden Ionen zeigen.

Aufgabe der vorliegenden Erfindung ist es daher, heterodisperse Chelatharze nach dem Phthalimidverfahren mit hoher Stabilität bei hoher Kapazität herzustellen, um langjährigen Einsatz einhergehend mit vielfacher Regenerierung sicherzustellen, unter Vermeidung toxikologisch bedenklicher Einsatzstoffe.

Überraschenderweise wurde nun gefunden, dass man Ionenaustauscher mit chelatisierenden, funktionellen Gruppen, insbesondere Aminoalkylenphosphonsäuregruppen oder Iminoessigsäuregruppen, mit deutlich verbesserter Quellungsstabilität im 200 Zyklentest sowie hoher Austauschkapazität findet, wenn man bei der Herstellung nach dem Suspensionspolymerisationsverfahren der als Matrix dienenden heterogenen Perlpolymerisate als Initiatoren pfropfaktive Initiatoren, insbesondere Peroxycarbonate, Peroxyester oder Perester alleine oder in Kombination, einsetzt.

Die mittels der pfropfaktiven Initiatoren erhältlichen makroporösen Perlpolymerisate werden dann nach dem Phthalimidverfahren zu aminomethylierten vernetzten vinylaromatischen Harzen umgesetzt, die dann beispielsweise mit Formaldehyd und Phosphor-III-Verbindungen in Gegenwart von Schwefelsäure umgesetzt werden.

Gegenstand der vorliegenden Erfindung ist deshalb ein Verfahren zur Herstellung heterodisperser Chelatharze, dadurch gekennzeichnet, dass man

a) Monomertröpfchen aus mindestens einer monovinylaromatischen Verbindung und mindestens einer polyvinylaromatischen Verbindung sowie einem Porogen und einem Initiator oder einer Initiatorkombination zu einem vernetzten Perlpolymerisat umsetzt,

b) dieses heterodisperse vernetzte Perlpolymerisat mit Phthalimidderivaten amidomethyliert,

c) das amidomethylierte Perlpolymerisat zu aminomethyliertem Perlpolymerisat umsetzt und

d) das aminomethylierte Perlpolymerisat zu einem chelatgruppenhaltigen Perlpolymerisat funktionalisiert

mit der Massgabe, dass als Initiator ein Peroxycarbonat, ein Peroxyester oder ein Perester eingesetzt wird.

Gegebenenfalls erfolgt nach dem Schritt d) die Umladung des heterodispersen Chelatharzes mittels einer Base, bevorzugt mit Natronlauge.

In Verfahrensschritt a) wird mindestens eine monovinylaromatische Verbindung und mindestens eine polyvinylaromatische Verbindung eingesetzt. Es ist jedoch auch möglich. Mischungen zweier oder mehrerer monoyinylaromatischer Verbindungen oder Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt monoethylenisch ungesättigte Verbindungen wie beispielsweise Styrol, Vinyltoluol, Ethylstyrol, α-Methylstyrol, Chlorstyrol, Chlormethylstyrol, Acrylsäurealkylester oder Methacrylsäurealkylester eingesetzt.

Besonders bevorzugt wird Styrol oder Mischungen aus Styrol mit den vorgenannten Monomeren eingesetzt.

Die monovinylaromatischen Verbindungen oder Mischungen aus Styrol mit den vorgenannten Monomeren werden zur Polymerisation vorgelegt. Die Mengen der weiteren Komponenten, beispielsweise die polyvinylaromatischen Verbindungen, der Initiator oder gegebenenfalls weitere Zusatzstoffe werden entsprechend zur monovinylaromatischen Verbindung bzw. in Bezug auf die Summe von Monomer und Vernetzer eingesetzt.

Bevorzugte polyvinylaromatische Verbindungen im Sinne der vorliegenden Erfindung sind für Verfahrensschritt a) multifunktionelle ethylenisch ungesättigte Verbindungen wie beispielsweise Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat und/oder Allylmethacrylat.

Die polyvinylaromatischen Verbindungen werden im allgemeinen in Mengen von 1 bis 20 Gew.-%, vorzugsweise 2 bis 12 Gew.-%, besonders bevorzugt 4 bis 10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats ausgewählt. Divinylbenzol ist in vielen Fällen geeignet. Für die

meisten Anwendungen sind kommerzielle Divinylbenzolqualitäten, die neben den Isomeren des Divinylbenzols auch Ethylvinylbenzol enthalten, ausreichend.

Die Herstellung der vernetzten Basispolymerisate kann nach bekannten Methoden der Suspensionspolymerisation erfolgen; vgl. Ullmann's Encyclopedia of Industrial Chemistry, $5^{th}$ ed., Vol. A21, 363-373, VCH Verlagsgesellschaft mbH, Weinheim 1992. Die wasserunlösliche Monomer/Vernetzer-Mischung wird einer wässrigen Phase zugesetzt, die vorzugsweise zur Stabilisierung der Monomer/Vernetzer-Tröpfchen in der dispersen Phase und der daraus entstehenden Perlpolymerisaten mindestens ein Schutzkolloid enthält.

Als Schutzkolloide sind natürliche und synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth) acrylsäure oder (Meth)-acrylsäureestern bevorzugt. Sehr gut geeignet sind auch Cellulosederivate, insbesondere Celluloseester und Celluloseether, wie Methylhydroxyethylcellulose, Methylhydroxypropylcellulose, Hydroxyethylcellulose oder Carboxymethylcellulose. Die Einsatzmenge der Schutzkolloide beträgt im Allgemeinen 0,02 bis 1 Gew.-%, vorzugsweise 0,05 bis 0,3 Gew.-%, bezogen auf die Wasserphase.

Das Gewichtsverhältnis wässrige Phase/organische Phase liegt im Bereich von vorzugsweise 0,5 bis 20, insbesondere 0,75 bis 5.

Die erfindungsgemäß im Verfahrensschritt a) einzusetzenden pfropfaktiven Initiatoren werden in Journal of Polymer Science, Polymer Chemistry Edition Vol. 14, No.6 June 1976, Seiten 1495 bis 1511 beschrieben.

Diese können bei der Perlpolymerisation alleine oder in Kombination eingesetzt werden. Im Sinne der vorliegenden Erfindung einsetzbare pfropfaktive Initiatoren sind Peroxycarbonate, Peroxyester oder Perester. Insbesondere bevorzugt zu verwenden sind:

tert.-Amylperoxy-2-ethylhexyl-carbonat
tert.-Butylperoxy-3,5,5-trimethylhexanoat
tert.-Butylperoxy-2-ethylhexanoat
tert.-Butylperoxy-isopropyl-carbonat
tert.-Butylperoxy-stearyl-carbonat
tert.-Amyl-peroxy-benzoat oder
tert.-Butylperoxy-benzoat.

Die Initiatoren/Radikalbildner können in katalytischen Mengen, vorzugsweise 0,01 bis 2,5 Gew.-%, insbesondere 0,12 bis 1,5 Gew.-%, bezogen auf die Summe von Monomer und Vernetzer, eingesetzt werden.

Damit die Basispolymerisate die makroporöse Struktur erhalten, setzt man der Monomer/Vernetzer-Mischung im Verfahrensschritt a) Porogene zu, wie sie beispielsweise bei Seidl et al. Adv. Polym. Sci., Vol. 5 (1967), S. 113 bis 213, beschrieben sind. Erfindungsgemäß bevorzugte Porogene sind aliphatische Kohlenwasserstoffe, Alkohole, Ester, Ether, Ketone, Trialkylamine, Nitroverbindungen, insbesondere Isododecan, Isodecan, Methylisobutylketon oder Methylisobutylcarbinol, in Mengen von 1 bis 150 Gew.-%, vorzugsweise 40 bis 100 Gew.-%, insbesondere 50 bis 80 Gew.-%, bezogen auf die Summe von Monomer und Vernetzer.

Nach einer besonderen Ausführungsform werden die Basispolymerisate im Verfahrensschritt a) während der Polymerisation in Anwesenheit eines Puffersystems hergestellt. Bevorzugt werden Puffersysteme, die den pH-Wert der Wasserphase zu Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Die Konzentration des Puffers in der Wasserphase beträgt vorzugsweise 0,5 bis 500 mmol, insbesondere 2,5 bis 100 mmol pro Liter wässriger Phase.

Die organische Phase kann durch Rühren in der wässrigen Phase verteilt werden, wobei die Teilchengröße der entstehenden Tröpfchen wesentlich von der Rührgeschwindigkeit abhängt.

Die Polymerisationstemperatur im Verfahrensschritt a) richtet sich nach der Zerfallstemperatur des eingesetzten Initiators. Sie liegt im allgemeinen zwischen 50 und 150°C, vorzugsweise zwischen 55 und 100°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C, begonnen und die Reaktionstemperatur mit fortschreitendem Polymerisationsumsatz gesteigert wird. Nach der Polymerisation wird das Polymerisat mit üblichen Methoden, beispielsweise durch Filtrieren oder Dekantieren, isoliert und gegebenenfalls gewaschen.

Im Verfahrensschritt b) wird zunächst das Amidomethylierungsreagens hergestellt. Dazu wird beispielsweise Phthalimid in einem Lösungsmittel gelöst und mit Formalin versetzt. Anschließend wird unter Wasserabspaltung hieraus ein Bis-(Phthalimidomethyl)ether gebildet. Der Bis-(Phthalimidomethyl)ether kann gegebenenfalls zum Phthalimidomethylester umgesetzt werden.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimidderivaten kondensiert. Als Katalysator wird

hierbei Oleum, Schwefelsäure oder Schwefeltrioxid eingesetzt.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt im Bereich von 10 bis 50 Gew.-%, vorzugsweise 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende aminomethylierte Perlpolymerisat wird schließlich mit vollentsalztem Wasser alkalifrei gewaschen.

Im Verfahrensschritt d) erfolgt die Herstellung der erfindungsgemäßen Ionenaustauscher durch Umsetzung des Aminomethylgruppen-haltigen heterodispersen, vernetzten, vinylaromatischen Grundpolymerisates in Suspension mit Verbindungen, die schließlich als funktionalisiertes Amin chelatisierende Eigenschaften entwickeln.

Als bevorzugte Reagenzien werden im Verfahrensschritt d) Chloressigsäure oder ihre Derivate, Thioharnstoff, Formalin in Kombination mit P-H aciden (nach modifizierter Mannich Reaktion) Verbindungen wie phosphorige Säure, Monoalkylphosphorigsäureester, Dialkylphosphorigsäureester, Formalin in Kombination mit S-H aciden Verbindungen wie Thioglykolsäure, Alkylmercaptanen, L-Cystein oder Formalin in Kombination mit Hydroxychinolin oder dessen Derivate, wie z.B. 7-(4-Ethyl-1-methyloctyl)-8-Hydroxychinolin eingesetzt.

Besonders bevorzugt werden Chloressigsäure oder Formalin in Kombination mit P-H aciden Verbindungen wie phosphorige Säure eingesetzt.

Als Suspensionsmedium wird Wasser oder wässrige Mineralsäure eingesetzt. Bevorzugt setzt man Wasser, wässrige Salzsäure oder wässrige Schwefelsäure in Konzentrationen zwischen 10 und 40 Gew.-%, bevorzugt 20 bis 35 Gew.- % ein.

Weiterhin Gegenstand der vorliegenden Erfindung sind die nach dem erfindungsgemäßen Verfahren hergestellten heterodispersen Ionenaustauscher mit chelatisierenden Gruppen, im Folgenden als heterodisperse Chelatharze bezeichnet.

Die vorliegende Erfindung betrifft daher auch heterodisperse Chelatharze erhältlich durch

a) Umsetzen von Monomertröpfchen aus mindestens einer monovinylaromatischen Verbindung und mindestens einer polyvinylaromatischen Verbindung sowie einem Porogen und einem Initiator oder einer Initiatorkombination zu einem vernetzten Perlpolymerisat,

b) Amidomethylieren dieses heterodispersen, vernetzten Perlpolymerisates mit Phthalimidderivaten,

c) Umsetzen des amidomethylierten Perlpolymerisates zu einem aminomethylierten Perlpolymerisat und

d) Funktionalisieren des aminomethylisierten Perlpolymerisates zu einem Chelatharz

mit der Maßgabe, dass als Initiator ein Peroxycarbonat, ein Perester oder ein Peroxyester eingesetzt wird.

Bevorzugt entstehen durch das erfindungsgemäße Verfahren heterodisperse Chelatharze dadurch gekennzeichnet, dass sich während des Verfahrensschritts d) chelatisierende Gruppen der Formel (I)

$$-(CH_2)-_n NR_1R_2 \qquad (I)$$

worin

$R_1$ für Wasserstoff oder einen Rest $CH_2$-COOH, $CH_2$ $P(O)(OH)_2$ oder

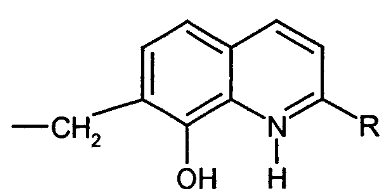

steht,

$R_2$ für einen Rest $CH_2COOH$, $CH_2P(O)(OH)_2$,

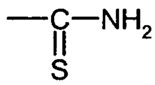

oder

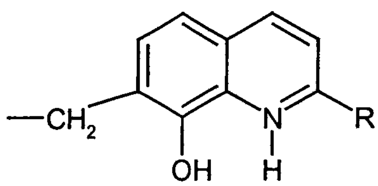

steht und

n für eine ganze Zahl 1, 2, 3 oder 4 steht, und

R für Wasserstoff oder einen verzweigten oder unverzweigten Alkylrest mit bis zu 12 Kohlenstoffatomen, bevorzugt für einen verzweigten oder unverzweigten $C_1$-$C_{10}$-Alkylrest, insbesondere bevorzugt für einen 1-MethyloctylRest steht,

ausbilden.

Die erfindungsgemäßen heterodispersen Chelatharze weisen bedingt durch den Einsatz von Porogen bevorzugt eine makroporöse Struktur auf.

Die erfindungsgemäß hergestellten heterodispersen Chelatharze eignen sich sowohl in der gemäß vorliegender Erfindung hergestellten Form aber auch als Pulverharze, Pasten oder als Compounds zum Einsatz in der Hydrometallurgie, bevorzugt zur Adsorbtion von Metallen, insbesondere Erdalkalimetallen, Schwermetallen oder Edelmetallen sowie deren Verbindungen aus wässrigen Lösungen oder organischen Flüssigkeiten. Die erfindungsgemäß hergestellten heterodispersen Chelatharze eignen sich besonders zur Entfernung von Erdalkalimetallen, Schwermetallen oder Edelmetallen aus wässrigen Lösungen, insbesondere aus wässrigen Lösungen von Erdalkalien oder Alkalien, aus Solen der Alkalichloridelektrolyse, aus wässrigen Salzsäuren, aus Abwässern oder Rauchgaswäschen, aber auch aus flüssigen oder gasförmigen Kohlenwasserstoffen, Carbonsäuren wie Adipinsäure, Glutarsäure oder Bernsteinsäure, Erdgasen, Erdgaskondensaten, Erdölen oder Halogenkohlenwasserstoffen, wie Chlor- oder Fluorkohlenwasserstoffen oder Fluor/Chlor-Kohlenwasserstoffen. Darüber hinaus eignen sich die erfindungsgemäßen heterodispersen Chelatharze zur Entfernung von Erdalkalimetallen aus Solen, wie sie üblicherweise in der Alkalichloridelektrolyse eingesetzt werden. Die erfindungsgemäßen heterodispersen Chelatharze eignen sich aber auch zur Entfernung von Schwermetallen, insbesondere Eisen, Cadmium oder Blei aus Stoffen die während einer elektrolytischen Behandlung, beispielsweise einer Dimerisierung von Acrylnitril zu Adiponitril, umgesetzt werden.

Ganz besonders geeignet sind die erfindungsgemäß hergestellten heterodispersen Chelatharze zur Entfernung von Beryllium, Magnesium, Calcium, Strontium, Barium aber auch von Quecksilber, Eisen, Cobalt, Nickel, Kupfer, Zink, Blei, Cadmium, Mangan, Uran, Vanadium, Elementen der Platingruppe, Gold oder Silber aus den oben aufgeführten Lösungen, Flüssigkeiten oder Gasen.

Darüber hinaus eignen sich die erfindungsgemäßen heterodispersen Chelatharze zur Entfernung von Rhodium oder Elementen der Platingruppe sowie Gold, Silber oder Rhodium oder Edelmetall-enthaltende Katalysatorreste aus organischen Lösungen oder Lösemitteln. Ferner eignen sich die erfindungsgemäßen heterodispersen Chelatharze zur Entfernung von Gallium aus bei der Aluminiumgewinnung anfallenden Natriumaluminatlösungen (Bauxitlösungen) sowie zur Abtrennung von Germanium aus wässrigen, sauren Lösungen. Germanium wird als Spurenelement in Kupfer-, Silber- und Zinkerzen wie auch in Kohle gefunden. Germanium wird technisch hauptsächlich aus den Erzen Germanit oder Renierit gewonnen, indem $GeO_2$ mittels HCl in das leicht destillierbare Ge-Tetrachlorid umgesetzt wird. Durch mehrfache Destillation werden alle Fremdstoffe beseitigt.

Eine wesentlich wirtschaftlichere Methode ist die nasschemische Trennung mit den beschriebenen, erfindungsgemäßen Chelatharzen.

Die erfindungsgemäß hergestellten heterodispersen Chelatharze können aber auch vermahlen werden, wodurch man Pulver, Pasten oder Compounds zum Einsatz in der Hydrometallurgie erhält. Versehen mit Aminomethylphosphonsäuregruppen oder anderen funktionellen Gruppen können sie gegebenenfalls in Kombination mit anderen Chelatharzen auf Trägermaterialien aufgetragen in einem wässrigen System Störelemente aufnehmen. Auf diese Weise können beispielsweise Antimon, Eisen, Cobalt, Silber, Zinn oder Nickel in Batterien gebunden werden und somit die Lebensdauer von Batterien verlängert werden.

**Beispiel 1**

1 a) Herstellung des Perlpolymerisates - Verwendung des Initiators tert.-Butylperoxy-2-ethylhexanoat

In einem Polymerisationsreaktor werden bei Raumtemperatur 1112 ml VE-Wasser (vollentsalztes Wasser), 150 ml einer 2 gew.-%igen wässrigen Lösung von Methylhydroxyethylcellulose sowie 7,5 Gramm Dinatriumhydrogenphosphat x 12 $H_2O$ vorgelegt. Die gesamte Lösung wird eine Stunde bei Raumtemperatur gerührt. Anschließend gibt man die Monomermischung bestehend aus 95,37 g Divinylbenzol 80,53 gew.-%ig, 864,63 g Styrol, 576 g Isododekan und 9,90 g tert.-Butylperoxy-2-ethylhexanoat 97 gew.-%ig zu. Der Ansatz bleibt zunächst 20 Minuten bei Raumtemperatur stehen und wird dann 30 Minuten bei Raumtemperatur bei einer Rührgeschwindigkeit von 200 rpM (Umdrehungen pro Minute) gerührt. Der Ansatz wird auf 70°C erhitzt, weitere 7 Stunden bei 70°C gerührt, dann auf 95°C erhitzt und weitere 2 Stunden bei 95°C gerührt. Nach dem Abkühlen wird das Perlpolymerisat abfiltriert und mit Wasser gewaschen und bei 80°C 48 Stunden getrocknet.

1b) Herstellung des amidomethylierten Perlpolymerisates

Bei Raumtemperatur werden 1044,5 g 1,2 Dichlorethan, 310,2 g Phthalimid und 216,7 g 30,0 gew.-%iges Formalin vorgelegt. Der pH-Wert der Suspension wird mit Natronlauge auf 5,5 bis 6 eingestellt. Anschließend wird das Wasser destillativ entfernt. Dann werden 22,75 g Schwefelsäure zudosiert. Das entstehende Wasser wird destillativ entfernt. Der Ansatz wird abgekühlt. Bei 30°C wird 83,1 g 65 gew.-%iges Oleum zudosiert, anschließend 300,0 g heterodisperses Perlpolymerisat gemäß Verfahrensschritt 1a). Die Suspension wird auf 70°C erhitzt und weitere 6 Stunden bei dieser Temperatur gerührt. Die Reaktionsbrühe wird abgezogen, VE-Wasser wird zudosiert und Restmengen an Dichlorethan werden destillativ entfernt.

Ausbeute an amidomethyliertem Perlpolymerisat : 1220 ml

Elementaranalytische Zusammensetzung: Kohlenstoff: 79,75 Gew.-%; Wasserstoff: 5,4 Gew.-%; Stickstoff: 4,50 Gew.-%;

1c) Herstellung des aminomethylierten Perlpolymerisates

Zu 1190 ml amidomethyliertem Perlpolymerisat aus Beispiel 1b) werden 1083 ml 20 gew.-%ige Natronlauge bei Raumtemperatur hinzudosiert. Die Suspension wird auf 180°C erhitzt und 8 Stunden bei dieser Temperatur gerührt.

Das erhaltene Perlpolymerisat wird mit voll entsalztem Wasser gewaschen.

Ausbeute an aminomethyliertem Perlpolymerisat: 1000 ml

Elementaranalytische Zusammensetzung: Kohlenstoff: 83,9 Gew.-%; Stickstoff: 6,9 Gew.-%; Wasserstoff: 8,0 Gew.-%;

Gehalt des Harzes an Aminomethylgruppen: 1,92 mol/l

1d) Herstellung des Chelatharzes mit Aminomethylphosphonsäuregruppen

In einem Laborreaktor werden 426 ml VE-Wasser und 820 ml aminomethyliertes Perlpolymerisat aus 1c) bei Raumtemperatur vorgelegt. Dazu werden bei Raumtemperatur 289,3 g eines Gemisches aus Phosphorigersäure sowie Di- und Monomethylphosphit mit einem Phosphorgehalt von insgesamt 33,4 Gew. % in 15 Minuten dosiert. Es wird 30 Minuten nachgerührt. Dann werden in 4 Stunden 1052,5 g Monohydrat bei 60°C dosiert. Die Suspension wird auf Rückflusstemperatur erhitzt. In einer Stunde werden 462,9 g 30 gew.-%ige Formalinlösung dosiert. Es wird dann weitere 6 Stunden bei dieser Temperatur gerührt. Nach dem Abkühlen wird das erhaltene Perlpolymerisat abfiltriert und mit VE-Wasser gewaschen.

Das gewaschene Perlpolymerisat wird in eine Säule überführt und durch Behandlung mit 4 gew.-%iger Natronlauge von der freien Wasserstoffform in die Dinatriumform überführt.

Ausbeute an Chelatharz mit Aminomethylphosphonsäuregruppen in der Natriumform: 1320 ml

Gehalt des Harzes an Stickstoff: 3,05 Gew.-%; Gehalt des Harzes an Phosphor: 10,0 Gew.-%;

Gehalt des Harzes an Aminomethylphosphonsäuregruppen-Totalkapazität: 3,066 mol /l

<u>**Beispiel 2**</u> (Vergleichsbeispiel entsprechender Ansatz zu EP-A-0 355 007)

2 a) Herstellung des Perlpolymerisates - Verwendung des Initiators Dibenzoylperoxid

In einem Polymerisationsreaktor werden bei Raumtemperatur 1112 ml Edelwasser, 150 ml einer 2 gew.-%igen wässrigen Lösung von Methylhydroxyethylcellulose sowie 7,5 Gramm Dinatriumhydrogenphosphat x 12 $H_2O$ vorgelegt. Die gesamte Lösung wird eine Stunde bei Raumtemperatur gerührt. Anschließend gibt man die Monomermischung bestehend aus 95,37 g Divinylbenzol 80,53 gew.-%ig, 864,63 g Styrol, 576 g Isododekan und 7,70 g Dibenzoylperoxid 75 gew.-% ig zu. Der Ansatz bleibt zunächst 20 Minuten bei Raumtemperatur stehen und wird dann 30 Minuten bei Raumtemperatur bei einer Rührgeschwindigkeit von 200 rpM gerührt. Der Ansatz wird auf 70°C erhitzt, weitere 7 Stunden bei 70°C gerührt, dann auf 95°C erhitzt und weitere 2 Stunden bei 95°C gerührt. Nach dem Abkühlen wird das erhaltene Perlpolymerisat abfiltriert und mit Wasser gewaschen und bei 80°C 48 Stunden getrocknet.

2b) Herstellung des amidomethylierten Perlpolymerisates

Bei Raumtemperatur werden 980,1 g 1,2 Dichlorethan, 291,1 g Phthalimid und 199,0 g 30,0 gew.-%iges Formalin vorgelegt. Der pH-Wert der Suspension wird mit Natronlauge auf 5,5 bis 6 eingestellt. Anschließend wird das Wasser destillativ entfernt. Dann werden 21,34 g Schwefelsäure zudosiert. Das entstehende Wasser wird destillativ entfernt. Der Ansatz wird abgekühlt. Bei 30°C wird 77,98 g 65 gew.-%iges Oleum zudosiert, anschließend 320,1 g heterodisperses Perlpolymerisat gemäß Verfahrensschritt 2a). Die Suspension wird auf 70°C erhitzt und weitere 6 Stunden bei dieser Temperatur gerührt. Die Reaktionsbrühe wird abgezogen, VE-Wasser wird zudosiert und Restmengen an Dichlorethan werden destillativ entfernt.

Ausbeute an amidomethyliertem Perlpolymerisat: 1020 ml

Elementaranalytische Zusammensetzung: Kohlenstoff: 80,1 Gew.-%; Wasserstoff: 5,6 Gew.-%; Stickstoff: 4,0 Gew.-%.

2c) Herstellung des aminomethylierten Perlpolymerisates

Zu 1000 ml amidomethyliertem Perlpolymerisat aus Beispiel 2b) werden 910 ml 20 gew.-%ige Natronlauge bei Raumtemperatur hinzudosiert. Die Suspension wird auf 180°C erhitzt und 8 Stunden bei dieser Temperatur gerührt.

Das erhaltene Perlpolymerisat wird mit voll entsalztem Wasser gewaschen.

Ausbeute an aminomethyliertem Perlpolymerisat: 810 ml

Elementaranalytische Zusammensetzung: Kohlenstoff: 84,75 Gew.-%; Stickstoff: 5,5 Gew.-%; Wasserstoff: 8,9 Gew.-%; Sauerstoff: 2,0 Gew. %.

Gehalt des Harzes an Aminomethylgruppen: 1,81 mol/l

2 d) Herstellung des Chelatharzes mit Aminomethylphosphonsäuregruppen

In einem Laborreaktor werden 390 ml VE-Wasser und 750 ml aminomethyliertes Perlpolymerisat aus 2c) bei Raumtemperatur vorgelegt. Dazu werden bei Raumtemperatur 267,8 g eines Gemisches aus Phosphorigersäure sowie Di- und Monomethylphosphit mit einem Phosphorgehalt von insgesamt 33,4 Gew.-% in 15 Minuten dosiert. Es wird 30 Minuten nachgerührt. Dann werden in 4 Stunden 1064,3 g Monohydrat bei 60°C dosiert. Die Suspension wird auf Rückflusstemperatur erhitzt. In einer Stunde werden 468,1 g 30 gew.-%ige Formalinlösung dosiert. Es wird dann weitere 6 Stunden bei dieser Temperatur gerührt. Nach dem Abkühlen wird das erhaltene Perlpolymerisat abfiltriert und mit VE-Wasser gewaschen.

Das gewaschene Perlpolymerisat wird in eine Säule überführt und durch Behandlung mit 4 gew.-%iger Natronlauge von der freien Wasserstoffform in die Dinatriumform überführt.

Ausbeute an Chelatharz mit Aminomethylphosphonsäuregruppen in der Natriumform: 1320 ml

Gehalt des Harzes an Stickstoff: 3,1 Gew.-%; Gehalt des Harzes an Phosphor: 12,0 Gew.-%

Gehalt des Harzes an Aminomethylphosphonsäuregruppen-Totalkapazität: 2,987 mol/l

Tabelle 1

| fasst Ergebnisse der Versuche zusammen: | | | |
|---|---|---|---|
| Versuch | Initiator | Totalkapazität in mol/l | Quellungsstabilitäts-test 200 Zyklen Anzahl ganzer Perlen in % |
| 1 | tert.-Butylperoxy-2-ethylhexanoat | 3,033 | 96 |
| 2 | Dibenzoylperoxid | 2,987 | 30 |

Aus Tabelle 1 ist zu erkennen, dass bei Einsatz von Initiatoren des Typs Peroxyester wie tert.-Butylperoxy-2-ethylhexanoat ein heterodisperses Chelatharz mit Aminomethylphosphonsäuregruppen hoher Stabilität und Kapazität entsteht. Bei Einsatz von Peroxiden des Typs Dibenzoylperoxid entsteht ein Chelatharz mit Aminomethylphosphonsäuregruppen deutlich schlechterer Stabilität.

**Untersuchungsmethoden:**

Die erfindungsgemäß hergestellten heterodispersen Chelatharze werden in den nachfolgenden Beispielen durch folgende Eigenschaften charakterisiert:

1. die Totalkapazität für Natriumionen
2. die osmotische Widerstandsfähigkeit im 200 Zyklentest

Diese Eigenschaften werden nach folgenden Verfahren bestimmt:

**Bestimmung der Totalkapazität (TK) des Harzes für Natriumionen**

100 ml zu untersuchendes Chelatharz wird in eine Filtersäule gefüllt und mit 3 gew.-%iger Salzsäure in 1,5 Stunden eluiert. Dann wird mit VE-Wasser gewaschen bis der Ablauf neutral ist.
50 ml zu untersuchendes Chelatharz wird in einer Säule mit 0,1 n Natronlauge beaufschlagt. Den Ablauf fängt man in einem 250 ml Messkolben auf und titriert die gesamte Menge gegen Methylorange mit 1 n Salzsäure.
Es wird solange aufgegeben, bis 250 ml Ablauf einen Verbrauch von 24,5 bis 25 ml an In Salzsäure haben. Nach beendeter Prüfung bestimmt man das Volumen des Austauschers in der Na- Form.

$$\text{Totalkapazität (TK)} = (X \cdot 25 - \Sigma V) \text{- } 3 \text{ in mol/l Austauscher}$$

X = Zahl der Ablauffraktionen
Σ V = Gesamtverbrauch in ml an 1n Salzsäure bei der Titration der Abläufe.

**Bestimmung der osmotischen Widerstandsfähigkeit im 200 Zyklentest**

50 ml zu untersuchendes heterodisperses Chelatharz wird in einem Glasrohr 200 mal einem je 1 Stunde dauernden Beladungszyklus ausgesetzt. Der Beladungszyklus besteht aus folgenden Einzelschritten: Beladen mit 0,5 n Salzsäure, Spülen mit VE-Wasser, Beladen mit 0,5 n Natronlauge, Spülen mit VE-Wasser. Anschließend wird unter dem Mikroskop die Anzahl der unversehrt gebliebenen Perlen ausgezählt.
Bestimmung der Menge basischer Aminomethylgruppen in aminomethylierten, vernetzten Polystyrol Perlpolymerisaten:
100 ml zu untersuchendes aminomethyliertes Perlpolymerisat wird auf dem Stampfvolumeter eingerüttelt und anschließend mit VE-Wasser in eine Glassäule gespült. In einer Stunde und 40 Minuten werden 1000 ml 2 gew.-%ige Natronlauge überfiltriert. Anschließend wird VE-Wasser überfiltriert bis 100 ml Eluat mit Phenolphthalein versetzt einen Verbrauch an 0,1 n (0,1 normaler) Salzsäure von höchstens 0,05 ml haben.
50 ml dieses Harzes werden in einem Becherglas mit 50 ml VE-Wasser und 100 ml In Salzsäure versetzt. Die Suspension wird 30 Minuten gerührt und anschließend in eine Glassäule gefüllt. Die Flüssigkeit fließt unten ab. Es werden weitere 100 ml 1n Salzsäure über das Harz in 20 Minuten filtriert. Anschließend werden 200 ml Methanol überfiltriert. Alle Eluate werden gesammelt und vereinigt und mit 1 n Natronlauge gegen Methylorange titriert.
Die Menge an Aminomethylgruppen in 1 Liter aminomethyliertem Harz errechnet sich nach folgender Formel: ( 200- V ) 20 = mol Aminomethylgruppen pro Liter Harz.

## Patentansprüche

1. Verfahren zur Herstellung heterodisperser Chelatharze, **dadurch gekennzeichnet, dass** man

    a) Monomertröpfchen aus mindestens einer monovinylaromatischen Verbindung und mindestens einer polyvinylaromatischen Verbindung sowie einem Porogen und einem Initiator oder einer Initiatorkombination zu einem vernetzten Perlpolymerisat umsetzt,

    b) dieses heterodisperse vernetzte Perlpolymerisat mit Phthalimidderivaten amidomethyliert,

    c) das amidomethylierte Perlpolymerisat zu aminomethyliertem Perlpolymerisat umsetzt und

    d) das aminomethylierte Perlpolymerisat zu einem chelatgruppenhaltigen Perlpolymerisat funktionalisiert

    mit der Maßgabe, dass als Initiator ein Peroxycarbonat, ein Perester oder ein Peroxyester eingesetzt wird.

2. Verfahren gemäß Anspruch 1, **dadurch gekennzeichnet, dass** nach dem Schritt d) die Umladung des heterodispersen Chelatharzes mittels einer Base erfolgt.

3. Verfahren gemäß der Ansprüche 1 und 2, **dadurch gekennzeichnet, dass** Verfahrensschritt a) in Gegenwart eines Schutzkolloids durchgeführt wird.

4. Verfahren gemäß Anspruch 3, **dadurch gekennzeichnet, dass** als Schutzkolloide Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureester eingesetzt werden.

5. Verfahren gemäß Anspruch 1, **dadurch gekennzeichnet, dass** als monovinylaromatische Verbindungen monoethylenisch ungesättigte Verbindungen eingesetzt werden.

6. Verfahren gemäß Anspruch 1, **dadurch gekennzeichnet, dass** als polyvinylaromatische Verbindungen Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat oder Allylmethacrylat eingesetzt werden.

7. Verfahren gemäß Anspruch 1, **dadurch gekennzeichnet, dass** in Verfahrensschritt b) zunächst ein Phthalimidoether gebildet wird.

8. Verfahren gemäß Anspruch 7, **dadurch gekennzeichnet, dass** der Phthalimidoether aus Phthalimid und Formalin hergestellt wird.

9. Verfahren gemäß der Ansprüche 7 und 8, **dadurch gekennzeichnet, dass** die Reaktion des Phthalimidoethers mit dem Perlpolymerisat in Gegenwart von Oleum, Schwefelsäure oder Schwefeltrioxid stattfindet.

10. Verfahren gemäß Anspruch 1, **dadurch gekennzeichnet, dass** im Verfahrensschritt d) Verbindungen eingesetzt werden, die als funktionalisierendes Amin chelatisierende Eigenschaften entwickeln.

11. Heterodisperse Chelatharze erhältlich durch

    a) Umsetzen von Monomertröpfchen aus mindestens einer monovinylaromatischen Verbindung und mindestens einer polyvinylaromatischen Verbindung sowie einem Porogen und einem Initiator oder einer Initiatorkombination zu einem vernetzten Perlpolymerisat,

    b) Amidomethylieren dieses heterodispersen, vernetzten Perlpolymerisates mit Phthalimidderivaten,

    c) Umsetzen des amidomethylierten Perlpolymerisates zu einem aminomethylierten Perlpolymerisat und

    d) Funktionalisieren des aminomethylisierten Perlpolymerisates zu einem Chelatharz

    mit der Massgabe, dass als Initiator ein Peroxycarbonat, ein Peroxyester oder ein Perester eingesetzt wird.

**12.** Heterodisperse Chelatharze gemäß Anspruch 11, **dadurch gekennzeichnet, dass** sich während des Verfahrensschrittes d) chelatisierende Gruppen der Formel (I)

$$—(CH_2)—_n NR_1R_2 \quad (I)$$

worin

$R_1$ für Wasserstoff oder einen Rest $CH_2$-COOH, $CH_2P(O)(OH)_2$ oder

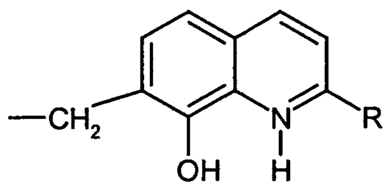

steht,

$R_2$ für einen Rest $CH_2COOH$, $CH_2P(O)(OH)_2$,

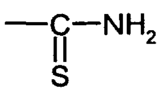

oder

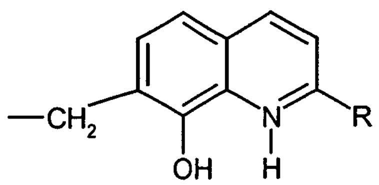

steht und

n für eine ganze Zahl 1, 2, 3 oder 4 steht, und

R für Wasserstoff oder einen verzweigten oder unverzweigten Alkylrest mit bis zu 12 Kohlenstoffatomen steht,

ausbilden.

**13.** Heterodisperse Chelatharze gemäß der Ansprüche 11 und 12, **dadurch gekennzeichnet, dass** diese nach Schritt d) mittels einer Base umgeladen werden.

**14.** Chelatharze gemäß der Ansprüche 11 bis 13, **dadurch gekennzeichnet, dass** diese eine makroporöse Struktur aufweisen.

**15.** Verwendung der Chelatharze gemäß der Ansprüche 11 bis 14 in der hergestellten Form, als Pulverharze, Pasten oder Compounds zum Einsatz in der Hydrometallurgie.

**16.** Verwendung der Chelatharze gemäß der Ansprüche 11 bis 14 zur Entfernung von Erdalkalimetallen, Schwermetallen oder Edelmetallen aus wässrigen Lösungen von Erdalkalimetallen oder Alkalien oder deren Dämpfen, aus Solen der Alkalichloridelektrolyse, aus wässrigen Salzsäuren, aus Abwässern oder Rauchgaswäschen, Grundwässern oder Deponieabwässern, aus flüssigen oder gasförmigen Kohlenwasserstoffen, Erdgasen, Erdgaskondensaten, Erdölen, sowie aus flüssigen oder gasförmigen Halogenkohlenwasserstoffen.

**17.** Verwendung der Chelatharze gemäß der Ansprüche 11 bis 14, **dadurch gekennzeichnet, dass** als Erdalkalimetalle Beryllium, Magnesium, Calcium, Strontium oder Barium und als Schwermetalle oder Edelmetalle, Quecksilber, Eisen, Cobalt, Nickel, Kupfer, Zink, Blei, Cadmium, Mangan, Uran, Vanadium, Elemente der Platingruppe, Gold oder Silber durch die Harze adsorbiert werden.

**18.** Verwendung der Chelatharze gemäß der Ansprüche 11 bis 14 zur Entfernung von Rhodium oder Elementen der Platingruppe sowie Gold, Silber oder Rhodium oder Edelmetall-enthaltende Katalysatorreste aus organischen Lösungen oder Lösemitteln.

**19.** Verfahren zur Entfernung von Erdalkalimetallen, Schwermetallen oder Edelmetallen aus wässrigen Lösungen oder Dämpfen, wässrigen Lösungen von Erdalkalimetallen oder Alkalien, Solen der Alkalichloridelektrolyse, wässrigen Salzsäuren, Abwässern oder Rauchgaswäschen, Grundwässern oder Deponieabwässern, flüssigen oder gasförmigen Kohlenwasserstoffen, Carbonsäuren oder flüssigen oder gasförmigen Halogenkohlenwasserstoffen, **dadurch gekennzeichnet, dass** Chelatharze gemäß der Ansprüche 11 bis 14 eingesetzt werden.

**20.** Verfahren gemäß Anspruch 19, **dadurch gekennzeichnet, dass** als Erdalkalimetalle Beryllium, Magnesium, Calcium, Strontium oder Barium und als Schwermetalle oder Edelmetalle Quecksilber, Eisen, Cobalt, Nickel, Kupfer, Zink, Blei, Cadmium, Mangan, Uran, Vanadium, Elemente der Platingruppe, Gold oder Silber entfernt werden.

**21.** Verfahren zur Entfernung von Magnesium, Calcium, Strontium, Barium oder Beryllium sowie Rhodium oder Elementen der Platingruppe, Gold, Silber, Rhodium oder Edelmetall-enthaltende Katalysatorreste aus organischen Lösungen oder Lösungsmitteln, **dadurch gekennzeichnet, dass** man Chelatharze gemäß der Ansprüche 11 bis 14 einsetzt.

**22.** Verwendung der Chelatharze gemäß der Ansprüche 11 bis 14 in der Hydrometallurgie der chemischen Industrie, der Elektronik-Industrie, der Galvanound Oberflächenindustrie oder der Abfall Entsorgungs- oder Verwertungsindustrie.

**23.** Verwendung der Chelatharze gemäß der Ansprüche 11 bis 14, **dadurch gekennzeichnet, dass** man Erdalkalimetalle aus Solen der Alkalichloridelektrolyse entfernen kann.

**24.** Verwendung der Chelatharze gemäß der Ansprüche 11 bis 14, **dadurch gekennzeichnet, dass** man Schwermetalle wie Eisen, Cadmium oder Blei aus Stoffen die während einer elektrolytischen Behandlung umgesetzt werden, entfernt werden.

**25.** Verfahren zur Entfernung von Erdalkalimetallen aus Solen der Alkalichloridelektrolyse, **dadurch gekennzeichnet, dass** man Chelatharze gemäß der Ansprüche 11 bis 14 einsetzt.

**26.** Verwendung der Chelatharze gemäß der Ansprüche 11 bis 14 zur Entfernung von Antimon, Eisen, Cobalt, Silber, Zinn oder Nickel in Batterien.

**27.** Verwendung der Chelatharze gemäß der Ansprüche 11 bis 14 zur Entfernung von Gallium aus Natriumaluminatlösungen (Bauxitlösungen), sowie zur Entfernung von Germanium aus wässrigen, sauren Lösungen.

Europäisches Patentamt

# EUROPÄISCHER RECHERCHENBERICHT

Nummer der Anmeldung
EP 02 00 8195

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 1 078 941 A (BAYER AG) 28. Februar 2001 (2001-02-28) * Spalte 1, Zeile 41 - Spalte 2, Zeile 51 * * Spalte 3, Zeile 37 - Zeile 53; Ansprüche 1-10 * | 1-27 | C08F8/00 B01J45/00 |
| Y | EP 1 078 690 A (BAYER AG) 28. Februar 2001 (2001-02-28) * das ganze Dokument * | 1-27 | |
| A | EP 1 078 688 A (BAYER AG) 28. Februar 2001 (2001-02-28) * Seite 2, Zeile 26 - Seite 3, Zeile 38 * * Seite 3, Zeile 53 - Seite 4, Zeile 5 * * Seite 4, Zeile 23 - Zeile 31 * * Seite 4, Zeile 54 - Seite 6, Zeile 9; Ansprüche 1-25 * | 1 | |
| A | GB 654 706 A (ROHM & HAAS COMPANY) 27. Juni 1951 (1951-06-27) * Seite 2, Zeile 72 - Zeile 91; Ansprüche 1-12 * | 1 | RECHERCHIERTE SACHGEBIETE (Int.Cl.7) |
| | | | C08F B01J |
| A | US 5 416 124 A (R. T. STRINGFIELD) 16. Mai 1995 (1995-05-16) * Ansprüche 1-15 * | 1 | |
| A | DATABASE WPI Section Ch, Week 199723 Derwent Publications Ltd., London, GB; Class A91, AN 1997-255570 XP002209964 & JP 09 087326 A (EGAWA H), 31. März 1997 (1997-03-31) * Zusammenfassung * | 1 | |

Der vorliegende Recherchenbericht wurde für alle Patentansprüche erstellt

| Recherchenort | Abschlußdatum der Recherche | Prüfer |
|---|---|---|
| DEN HAAG | 15. August 2002 | Permentier, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 00 8195

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2002

| Im Recherchenbericht angeführtes Patentdokument | Datum der Veröffentlichung | Mitglied(er) der Patentfamilie | Datum der Veröffentlichung |
|---|---|---|---|
| EP 1078941 A | 28-02-2001 | DE 19949464 A1 | 01-03-2001 |
| | | EP 1078941 A1 | 28-02-2001 |
| | | JP 2001114824 A | 24-04-2001 |
| EP 1078690 A | 28-02-2001 | DE 19954399 A1 | 01-03-2001 |
| | | CN 1287887 A | 21-03-2001 |
| | | EP 1078690 A2 | 28-02-2001 |
| | | JP 2001098018 A | 10-04-2001 |
| EP 1078688 A | 28-02-2001 | DE 19954393 A1 | 01-03-2001 |
| | | CN 1286143 A | 07-03-2001 |
| | | EP 1078688 A2 | 28-02-2001 |
| | | JP 2001098019 A | 10-04-2001 |
| GB 654706 A | 27-06-1951 | US 2591574 A | 01-04-1952 |
| | | DE 829223 C | 24-01-1952 |
| | | FR 60657 E | 22-11-1954 |
| | | FR 988486 A | 28-08-1951 |
| | | NL 73179 C | |
| US 5416124 A | 16-05-1995 | DE 69502396 D1 | 10-06-1998 |
| | | DE 69502396 T2 | 26-11-1998 |
| | | EP 0766701 A1 | 09-04-1997 |
| | | JP 10502107 T | 24-02-1998 |
| | | WO 9535327 A1 | 28-12-1995 |
| | | US 5460725 A | 24-10-1995 |
| JP 9087326 A | 31-03-1997 | KEINE | |

EPO FORM P0461

Für nähere Einzelheiten zu diesem Anhang : siehe Amtsblatt des Europäischen Patentamts, Nr.12/82